# FASCICULE DE BREVET EUROPEEN

(11) **EP 3 798 160 B1**
(45) Date de publication et mention de la délivrance du brevet: **19.01.2022**
(21) Numéro de dépôt: 20194998.9
(22) Date de dépôt: 08.09.2020
(51) Int. Cl.: B65G 47/22, B65G 47/31, B65G 21/14

(54) **DISPOSITIF DE TRANSPORT DE PRODUITS**
TRANSPORTVORRICHTUNG FÜR PRODUKTE
DEVICE FOR TRANSPORTING PRODUCTS

(30) Priorité: 24.09.2019 FR 1910504
(43) Date de publication de la demande: 31.03.2021
(73) Titulaire: SG2C, 44320 Saint-Viaud (FR)
(72) Inventeur: GRIAS, Alexis, 44640 VUE (FR)
(74) Mandataire: Ipsilon

(56) Documents cités:
- US-A- 4 960 198

## Description

La présente invention concerne un dispositif de transport de produits.

Elle concerne plus particulièrement un dispositif de transport de produits comprenant au moins un transporteur dit amont, un transporteur intermédiaire et un transporteur dit aval disposés en ligne avec le transporteur intermédiaire s'étendant entre les transporteurs amont et aval, chaque transporteur comprenant au moins une bande sans fin, des rouleaux autour desquels la bande s'enroule au moins partiellement, un système de maintien en tension de la bande et au moins un dispositif moteur d'entraînement en déplacement de ladite bande autour desdits rouleaux, la bande de chaque transporteur délimitant entre deux des rouleaux dudit transporteur, au niveau de la surface dite active de la bande apte à porter des produits, un chemin d'entraînement en déplacement des produits suivant une direction de déplacement des produits avec l'une des extrémités du chemin définie par l'un des rouleaux formant l'entrée d'alimentation en produits du chemin et l'extrémité opposée du chemin définie par un autre des rouleaux formant la sortie d'évacuation des produits, les chemins des transporteurs s'étendant dans le prolongement l'un de l'autre.

La conception d'un dispositif de transport telle que décrite ci-dessus est connue comme l'illustre le document US-4.960.198 et peut permettre notamment un groupement ou un dégroupage de produits pour disposer les produits sur le transporteur aval en rangées suivant une direction transversale à la direction de déplacement du transporteur avec un pas prédéterminé entre lesdites rangées.

US-4.960.198 divulgue ainsi un dispositif de transport de produits selon le préambule de la revendication 1.

Un tel dispositif de transport permet ainsi à partir d'une alimentation en vrac des produits de réaligner les produits. Toutefois, jusqu'à présent la conception des dispositifs de transport oblige à dédier un dispositif de transport à un type de produit.

Un but de l'invention est de proposer un dispositif de transport dont la conception permet le transport de produits de dimensions variables sans nuire à la qualité du tri obtenu ni à la simplicité du dispositif de transport.

A cet effet, l'invention a pour objet un dispositif de transport de produits selon la revendication 1.

Selon un mode de réalisation, le système d'entraînement en déplacement des premier et deuxième ensembles comprend deux vérins et une unité de pilotage, de préférence de manière synchrone, des vérins, l'un des vérins étant disposé entre le support et le premier ensemble, l'autre des vérins étant disposé entre le support et le deuxième ensemble. Il en résulte un réglage rapide et fiable de la dimension en longueur du chemin du transporteur intermédiaire.

Selon un mode de réalisation, le système d'entraînement en déplacement des premier et deuxième ensembles comprend une transmission sans fin à courroie à deux sens opposés d'entraînement en déplacement de ladite courroie et une unité de pilotage de ladite transmission, cette courroie, qui suit une trajectoire en boucle fermée, présentant deux brins parallèles, lesdits premier et deuxième ensembles étant couplés, l'un, à l'un des brins, l'autre à l'autre des brins. A nouveau, une simple inversion du sens d'entraînement en rotation de la courroie peut permettre un réglage rapide et fiable de la dimension en longueur du chemin du transporteur intermédiaire.

Selon un mode de réalisation, le dispositif d'entraînement en déplacement en va-et-vient du support comprend un chariot, un chemin de guidage en déplacement du chariot, et un mécanisme d'entraînement en déplacement en va-et-vient dudit chariot le long du chemin de guidage, ledit chariot étant couplé mécaniquement au support. Cette conception se caractérise par sa simplicité et permet une fiabilité accrue du dispositif de transport.

Selon un mode de réalisation, le mécanisme d'entraînement en déplacement en va-et-vient du chariot comprend une transmission sans fin à courroie, ledit chariot étant couplé à ladite courroie.

Selon un mode de réalisation, le dispositif d'entraînement en déplacement en va-et-vient du support est configuré pour permettre, lors d'une phase dite de recul du transporteur intermédiaire, une course de déplacement des rouleaux définissant respectivement l'extrémité d'entrée et l'extrémité de sortie du chemin du transporteur intermédiaire au moins égale à l'entraxe entre lesdits rouleaux. Cette disposition permet une prise en charge optimale des produits. La course de déplacement des rouleaux définissant respectivement l'extrémité d'entrée et l'extrémité de sortie du chemin du transporteur intermédiaire est au moins égale à l'entraxe entre lesdits rouleaux, c'est-à-dire au moins égale à la longueur du chemin du transporteur intermédiaire prise entre l'extrémité d'entrée et l'extrémité de sortie du chemin dudit transporteur intermédiaire Ainsi, dès qu'un réglage de la longueur du chemin du transporteur intermédiaire est choisie, la course de déplacement en particulier de recul du transporteur intermédiaire est adaptée à cette longueur.

Selon un mode de réalisation, le système de maintien en tension de la bande d'au moins l'un des transporteurs comprend au moins un organe rotatif de type rouleau porté par le support, cet organe rotatif étant disposé autour de la bande, à l'extérieur de la boucle fermée formée par ladite bande et en contact d'appui avec la bande.

Selon un mode de réalisation, le système de maintien en tension de la bande d'au moins l'un des transporteurs comprend au moins l'un des rouleaux autour desquels la bande dudit transporteur s'enroule au moins partiellement, ce rouleau étant un rouleau autre que l'un des rouleaux définissant une extrémité du chemin du transporteur.

Selon un mode de réalisation, le ou au moins l'un des dispositifs moteur d'entraînement en déplacement de la bande autour desdits rouleaux d'au moins l'un des transporteurs est formé par l'un des rouleaux autour desquels la bande dudit transporteur s'enroule au moins partiellement, ce rouleau étant équipé d'un système moteur d'entraînement en rotation.

Selon un mode de réalisation, le système d'entraînement en déplacement des premier et deuxième ensembles dans le sens d'un rapprochement ou d'un écartement l'un de l'autre est un système d'entraînement en déplacement de manière synchrone desdits premier et deuxième ensembles. A nouveau cette disposition permet de simplifier le dispositif de transport.

### Brève description des dessins

L'invention sera bien comprise à la lecture de la description suivante d'exemples de réalisation, en référence aux dessins annexés dans lesquels :
[Fig. 1] représente une vue schématique d'un dispositif de transport conforme à l'invention ;

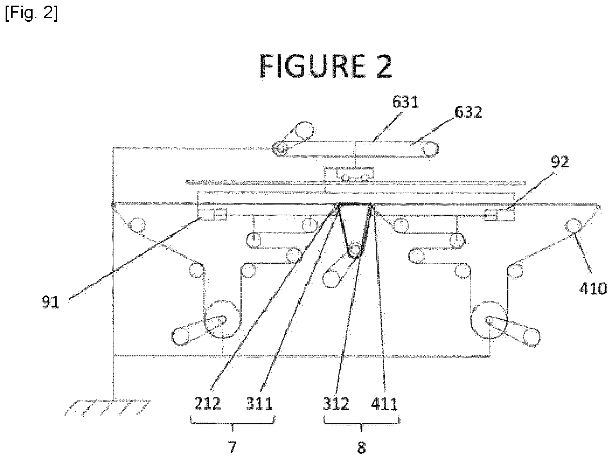

[Fig. 2] représente une vue schématique du dispositif de transport de la figure 1 après réglage de la longueur du chemin du transporteur intermédiaire ;

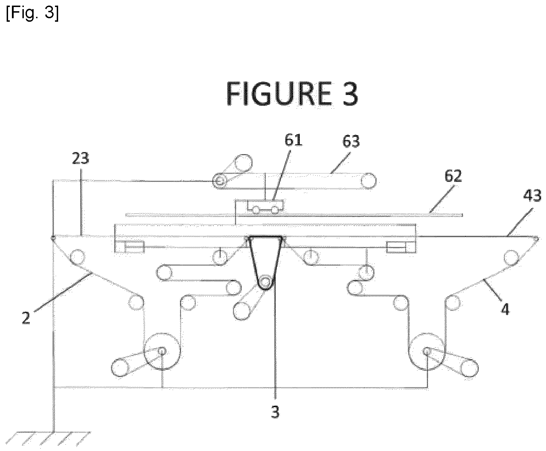

[Fig. 3] représente une vue schématique du dispositif de transport de la figure 2 après déplacement du chariot vers la gauche dans le sens d'un recul du transporteur intermédiaire par rapport au sens d'avancement des produits ;

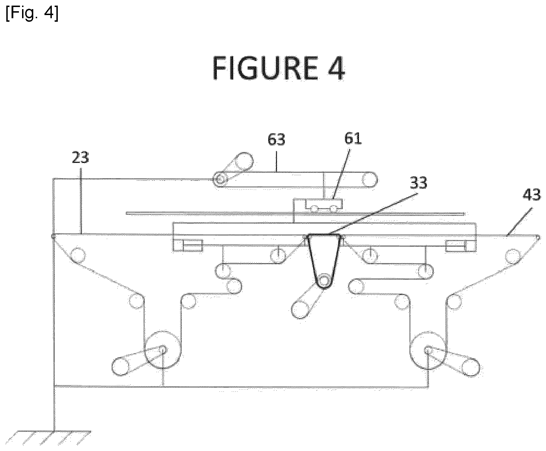

[Fig. 4] représente une vue schématique du dispositif de transport de la figure 3 après déplacement du chariot vers la droite dans le sens d'une avance du transporteur intermédiaire ;
[Fig. 5] représente une vue schématique d'un autre mode de réalisation d'un dispositif de transport conforme à l'invention ;

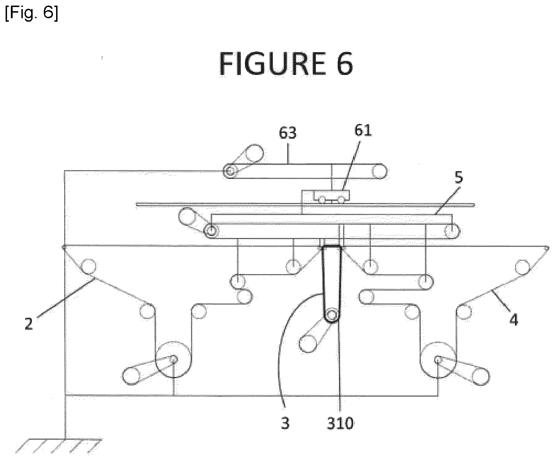

[Fig. 6] représente une vue schématique du dispositif de transport de la figure 5 après déplacement du chariot ;
[Fig. 7] représente sous forme de vues schématiques, les différentes étapes du transport d'un produit depuis le transporteur amont vers le transporteur aval ;
[Fig. 8] représente une vue schématique de dessus d'un dispositif de transport conforme à l'invention ;

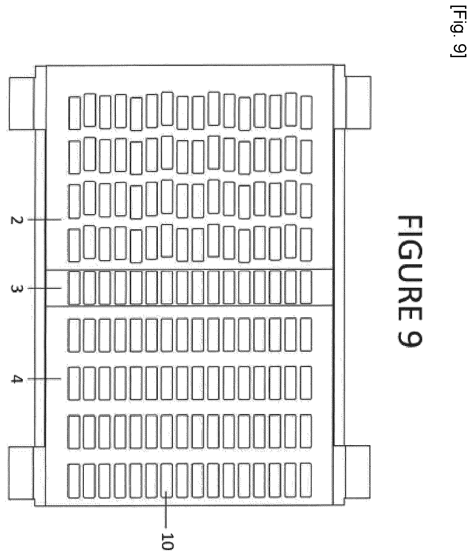

[Fig. 9] représente une vue schématique de dessus d'un dispositif de transport conforme à l'invention, la longueur du chemin du transporteur intermédiaire étant augmentée par rapport à la figure 8.

Comme mentionné ci-dessus, l'invention a pour objet un dispositif 1 de transport de produits 10 qui peuvent être des produits quelconques, bien que l'invention s'applique plus particulièrement au domaine des produits de l'industrie agro-alimentaire. Ce dispositif 1 de transport de produit peut s'interposer entre un poste d'alimentation en produits du dispositif 1 de transport et un poste de réception des produits du dispositif 1 de transport. Ces postes d'alimentation et de réception peuvent affecter un grand nombre de formes.

Le dispositif 1 de transport comprend au moins trois transporteurs 2, 3, 4, à savoir un transporteur 2 dit amont, un transporteur 3 intermédiaire et un transporteur 4 dit aval disposés en ligne avec le transporteur 3 intermédiaire s'étendant entre les transporteurs 2 amont et 4 aval pour permettre un transport des produits depuis le transporteur amont vers le transporteur 4 aval en passant par le transporteur 3 intermédiaire.

Chaque transporteur 2, 3, 4 est un convoyeur à bande de manière en soi connue. Chaque transporteur 2 ; 3 ; 4 comprend au moins une bande sans fin, c'est-à-dire une bande enroulée sur elle-même en formant une boucle fermée, des rouleaux autour desquels la bande s'enroule au moins partiellement, un système de maintien en tension de la bande et au moins un dispositif moteur d'entraînement en déplacement de la bande autour des rouleaux pour permettre l'entraînement en déplacement de la bande suivant une trajectoire en boucle à une vitesse d'entraînement V1 pour le transporteur 2 amont, à une vitesse d'entraînement V2 pour le transporteur 3 intermédiaire et à une vitesse d'entraînement V3 pour le transporteur 4 aval. Ainsi, le transporteur 2 amont comprend une bande 20 sans fin, des rouleaux 210, 211, 212 autour desquels la bande 20 s'enroule au moins partiellement, un système 24 de maintien en tension de la bande 20 et au moins un dispositif 25 moteur d'entraînement en déplacement de ladite bande 20 autour desdits rouleaux. De la même manière, le transporteur 3 intermédiaire comprend une bande 30 sans fin, des rouleaux 310, 311, 312 autour desquels la bande 30 s'enroule, un système 34 de maintien en tension de la bande 30 et au moins un dispositif 35 moteur d'entraînement en déplacement de ladite bande 30 autour desdits rouleaux. Enfin, le transporteur 4 aval comprend au moins une bande 40 sans fin, des rouleaux 410, 411, 412 autour desquels la bande 40 s'enroule, un système 44 de maintien en tension de la bande 40 et au moins un dispositif 45 moteur d'entraînement en déplacement de ladite bande 40 autour desdits rouleaux 410, 411, 412. La bande de chaque transporteur présente une surface active de transport des produits qui s'étend généralement horizontalement. Cette surface active de transport des produits est formée par la partie supérieure de la bande et correspond à la surface de la bande sur laquelle des produits peuvent être disposés.

En pratique, la bande transporteuse de chacun des transporteurs comprend un brin supérieur et un retour inférieur coudé. La surface active, apte à porter des produits, de la bande transporteuse est formée par le brin supérieur de la bande. Le retour inférieur coudé sert au stockage de l'excès de bande. Cette surface active des produits de la bande s'étend entre deux des rouleaux autour desquels la bande s'enroule au moins partiellement, en particulier, autour des deux rouleaux d'extrémité autour desquels le brin supérieur de la bande s'enroule. Ainsi, la bande de chaque transporteur délimite entre deux des rouleaux autour desquels la bande s'enroule au moins partiellement, au niveau de la surface active de la bande, un chemin d'entraînement en déplacement des produits suivant une direction D de déplacement du produit avec l'une des extrémités du chemin défini par l'un des rouleaux formant l'entrée d'alimentation en produit du chemin et l'extrémité opposée du chemin définie par un autre des rouleaux formant la sortie d'évacuation des produits. La bande 20 du transporteur 2 amont délimite donc entre les rouleaux 211 et 212 un chemin 23 d'entraînement en déplacement des produits avec l'extrémité 231 amont du chemin 23 définie par le rouleau 211 formant l'entrée d'alimentation en produit 10 du chemin 23 et l'extrémité 232 opposée aval du chemin 23 définie par le rouleau 212 formant la sortie d'évacuation des produits.

De même, la bande 30 du transporteur 3 intermédiaire délimite entre les rouleaux 311 et 312 un chemin 33 d'entraînement en déplacement des produits avec l'extrémité 331 du chemin 33 définie par le rouleau 311 formant l'entrée d'alimentation en produit 10 du chemin 33 et l'extrémité 332 opposée aval définie par le rouleau 312 du chemin 33 formant la sortie d'évacuation du produit. Enfin, la bande 40 du transporteur 4 aval délimite entre les rouleaux 411 et 412 un chemin 43 d'entraînement en déplacement du produit avec l'extrémité 431 amont du chemin 43 définie par le rouleau 411 formant l'entrée d'alimentation en produit 10 du chemin 43 et l'extrémité 432 opposée aval du chemin 43 définie par le rouleau 412 formant la sortie d'évacuation des produits.

Les chemins 23, 33, 43 des transporteurs 2, 3 et 4 s'étendent dans le prolongement l'un de l'autre pour assurer une continuité du transport depuis le transporteur 2 amont vers le transporteur 4 aval via le transporteur 3 intermédiaire.

Pour permettre la réalisation d'un front de transition mobile entre le transporteur 2 amont et le transporteur 3 intermédiaire d'une part, et entre le transporteur 3 intermédiaire et le transporteur 4 aval d'autre part, le rouleau 212 définissant l'extrémité 232 de sortie du chemin 23 du transporteur 2 amont, le rouleau 411 définissant l'extrémité 431 d'entrée du chemin 43 du transporteur aval 4 et les rouleaux 311, 312 définissant respectivement l'entrée 331 d'entrée et l'extrémité 332 de sortie du chemin 33 du transporteur 3 intermédiaire sont portés par un support 5 commun équipé d'un dispositif 6 d'entraînement en déplacement en va-et-vient du support 5 pour permettre un déplacement des rouleaux 212, 411, 311 et 312 portés par le support 5 parallèlement à eux-mêmes dans le sens d'un rapprochement de l'extrémité 231 d'entrée du chemin 23 du transporteur 2 amont lors d'une phase dite de recul du transporteur 3 intermédiaire et dans le sens d'un rapprochement de l'extrémité 432 de sortie du chemin 43 du transporteur 4 aval lors d'une phase dite d'avance du transporteur 3 intermédiaire. Ainsi, le brin supérieur de la bande de transport 2 amont, c'est-à-dire le chemin du transporteur 2 amont et le brin supérieur de la bande du transporteur 4 aval, c'est-à-dire le chemin du transporteur 4 aval, ont une longueur variable en fonction de la position des fronts de transition délimités, l'un, par le rouleau 212 définissant l'extrémité de sortie du chemin du transporteur 2 amont et le rouleau 311 définissant l'extrémité 331 d'entrée du chemin du transporteur 3 intermédiaire, l'autre, par le rouleau 312 définissant l'extrémité 332 de sortie du chemin du transporteur 3 intermédiaire et le rouleau 411 définissant l'extrémité 431 d'entrée du chemin 43 du transporteur aval 4.

En pratique, le dispositif 6 d'entraînement en va-et-vient du support 5 comprend des moyens d'entraînement en déplacement en va-et-vient du support 5 et une unité de pilotage des moyens d'entraînement en déplacement en va-et-vient du support 5 en fonction des données mémorisées ou acquises.

L'unité de pilotage est une unité électronique et/ou informatique comprenant au moins un microprocesseur et une mémoire de travail. Lorsque l'expression "l'unité de pilotage est configurée pour" est utilisée, cela signifie que le microprocesseur comprend des instructions pour réaliser l'action.

Cette unité de pilotage est donc configurée pour piloter le déplacement des fronts de transition, et éventuellement les vitesses des transporteurs amont et aval, en fonction du flux de produits souhaité.

Pour permettre un tel pilotage, l'unité de pilotage reçoit des informations. Le dispositif 1 de transport comprend donc au moins des moyens de détection des produits au moins sur le transporteur amont et des moyens pour connaître la position des fronts de transition et/ou du chariot qui sera décrit ci-après.

Les moyens pour connaître la position des fronts de transition et/ou du chariot peuvent être formés par un encodeur équipant au moins l'un des dispositifs moteur d'entraînement en déplacement de la bande de l'un des transporteurs.

Les moyens de détection de produits peuvent comprendre des capteurs de présence, tels qu'une caméra ou une cellule photoélectrique, associés à un système laser ou autre.

Le dispositif 1 de transport comprend encore des moyens d'entrée de données relatives à des consignes de positionnement des produits. Ces moyens d'entrée de données peuvent comprendre une interface homme/machine, une mémoire de données prédéfinies ou autre.

Le support 5 est généralement quant à lui un ensemble mécano-soudé qui peut affecter un grand nombre de formes.

Dans les exemples représentés, le dispositif 6 d'entraînement en déplacement en va-et-vient du support 5 comprend un chariot 61, un chemin 62 de guidage en déplacement du chariot 61, et un mécanisme 63 d'entraînement en déplacement en va-et-vient dudit chariot 61 le long du chemin 62 de guidage, ledit chariot 61 étant couplé mécaniquement au support 5.

Le mécanisme 63 d'entraînement en déplacement en va-et-vient du chariot 61 comprend une transmission 631 sans fin à courroie 632, ledit chariot 61 étant couplé à ladite courroie 632. La courroie 632 s'enroule autour de deux poulies dont l'une est motrice pour délimiter deux brins parallèles et le chariot 61 est couplé à l'un des brins de sorte que l'entraînement en rotation dans un sens de la poulie motrice et par suite le déplacement dans un sens de la courroie 632 génère un déplacement du chariot 61 le long du chemin 62 de guidage formé par un rail en direction de l'extrémité d'entrée du chemin transporteur 2 amont tandis que l'entraînement en rotation dans un sens opposé de la poulie motrice génère un déplacement du chariot 61 le long du chemin 62 de guidage en direction de l'extrémité de sortie du chemin du transporteur 4 aval. On note que le chemin 62 de guidage du chariot 61 s'étend orthogonalement à l'axe longitudinal des rouleaux définissant l'extrémité d'entrée et l'extrémité de sortie du transporteur 3 intermédiaire. Le déplacement du chariot 61 vers l'extrémité d'entrée du chemin du transporteur 2 amont entraîne une réduction de la longueur du chemin du transporteur 2 amont et une augmentation de la longueur du chemin du transporteur 4 aval tandis que le déplacement du chariot 61 vers l'extrémité de sortie du chemin du transporteur 4 aval entraîne une augmentation de la longueur du chemin du transporteur 2 amont et une réduction de la longueur du chemin du transporteur 4 aval, la longueur du chemin 33 du transporteur 3 intermédiaire prise entre l'extrémité 331 d'entrée et l'extrémité 332 de sortie dudit chemin 33 demeurant constante au cours de ce déplacement du chariot 61.

Pour permettre un ajustement en longueur du chemin 33 du transporteur 3 intermédiaire, le rouleau 212 définissant l'extrémité de sortie du chemin 23 du transporteur amont 2 et le rouleau 311 définissant l'extrémité 331 d'entrée du chemin 33 du transporteur 3 intermédiaire forment un premier ensemble 7. Le rouleau 312 définissant l'extrémité 332 de sortie du chemin 33 du transporteur 3 intermédiaire et le rouleau 411 définissant l'extrémité 431 d'entrée du chemin 43 du transporteur 4 aval forment un deuxième ensemble 8. Le dispositif 1 de transport comprend, quant à lui, embarqué sur ledit support 5, un système 9 d'entraînement en déplacement des premier et deuxième ensembles 7, 8 par déplacement des rouleaux desdits ensembles parallèlement à eux-mêmes, dans le sens d'un rapprochement ou d'un écartement des premier et deuxième ensembles pour permettre de faire varier la longueur du chemin 33 du transporteur 3 intermédiaire prise entre l'extrémité 331 d'entrée et l'extrémité 332 de sortie du chemin 33 dudit transporteur 3 intermédiaire.

Généralement, le système 9 d'entraînement en déplacement des premier et deuxième ensembles 7 et 8 comprend une mémoire de stockage d'un paramètre représentatif de la longueur de consigne du chemin 33 de transporteur 3 intermédiaire, c'est-à-dire de l'entre-axe entre les rouleaux 311 et 312 définissant respectivement l'extrémité 331 d'entrée et l'extrémité 332 de sortie du chemin 33 du transporteur 3 intermédiaire, des moyens d'entraînement des premier et deuxième ensembles 7 et 8 et une unité de pilotage des moyens d'entraînement, l'unité de pilotage étant configurée pour commander les moyens d'entraînement en fonction au moins des données mémorisées.

De la même manière, et comme mentionné ci-dessus, le dispositif 6 d'entraînement en déplacement en va-et-vient du support 5 comprend, en sus des moyens d'entraînement en déplacement en va-et-vient du support 5, une unité de pilotage, l'unité de pilotage étant configurée pour commander les moyens d'entraînement en déplacement en va-et-vient du support 5 au moins en fonction des données mémorisées.

Le dispositif 6 d'entraînement en déplacement en va-et-vient du support 5 est configuré pour permettre, lors d'une phase dite de recul du transporteur 3 intermédiaire, une course de déplacement des rouleaux 311, 312 définissant respectivement l'extrémité 331 d'entrée et l'extrémité 332 de sortie du chemin 33 du transporteur 3 intermédiaire au moins égale à l'entraxe entre lesdits rouleaux 311, 312.

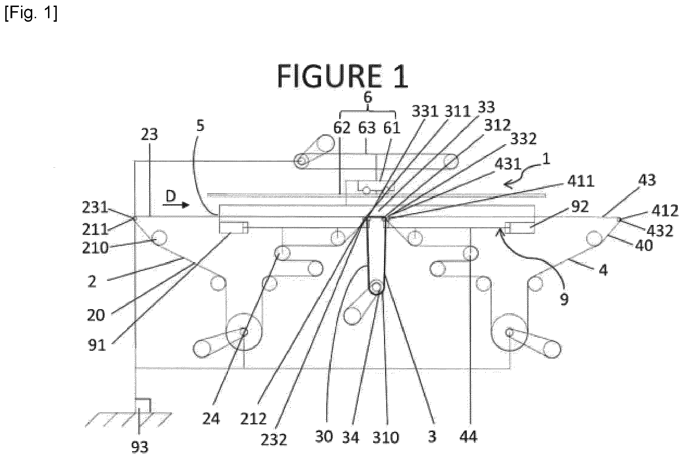

Le système 9 d'entraînement en déplacement des premier et deuxième ensembles 7, 8 et en particulier les moyens d'entraînement en déplacement dudit système 9 peuvent affecter un grand nombre de formes. Ainsi, dans l'exemple représenté à la figure 1, le système 9 d'entraînement en déplacement des premier et deuxième ensembles 7 et 8 comprend deux vérins 91, 92 et une unité 93 de pilotage des vérins 91 et 92. L'un des vérins est disposé entre le support 5 et le premier ensemble 7 tandis que l'autre des vérins 91, 92 est disposé entre le support 5 et le deuxième ensemble 8.

La rétractation des vérins 91, 92 permet une augmentation de la longueur du chemin du transporteur 3 intermédiaire tandis que la sortie des vérins 91, 92 permet une réduction de la longueur du chemin des transporteurs 3 intermédiaires. Dans les exemples représentés, ces vérins fonctionnent de manière synchrone.

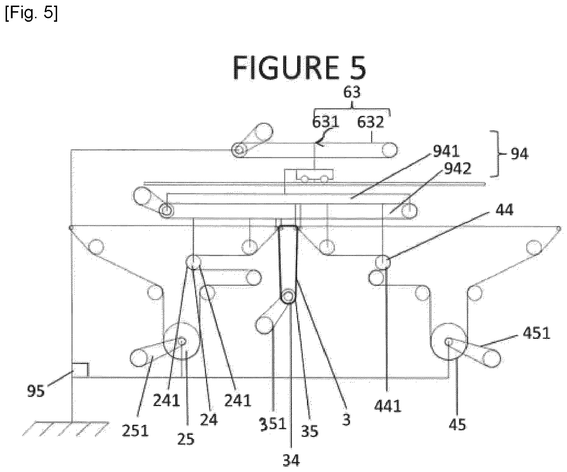

En variante et comme illustré à la figure 5, le système 9 d'entraînement en déplacement des premier et deuxième ensembles 7 et 8 peut comprendre une transmission sans fin à courroie 94 à deux sens opposés d'entraînement en déplacement de ladite courroie 94 et une unité 95 de pilotage de ladite transmission. La courroie 94 qui suit une trajectoire en boucle fermée présente deux brins parallèles représentés en 941 et 942 aux figures. Les premier et deuxième ensembles 7 et 8 sont couplés l'un, au brin 941, l'autre, à l'autre des brins 942. Ainsi, l'entraînement en déplacement de la courroie 94 dans un sens peut permettre un écartement des premier et deuxième ensembles 7 et 8 tandis que l'entraînement en déplacement de la courroie 94 dans un sens opposé peut permettre un rapprochement desdits premier et deuxième ensembles 7 et 8.

On note que dans les exemples représentés, indépendamment de la conception du système 9 d'entraînement en déplacement des premier et deuxième ensembles 7 et 8 dans le sens d'un rapprochement ou d'un écartement l'un de l'autre, le système 9 d'entraînement est un système 9 d'entraînement en déplacement de manière synchrone des premier et deuxième ensembles 7 et 8.

Par ailleurs, ce système 9 d'entraînement en déplacement des premier et deuxième exemples 7 et 8 et le dispositif 6 d'entraînement en déplacement en va-et-vient du support 5 sont sélectivement activables.

Comme mentionné ci-dessus, chaque transporteur comprend un système de maintien en tension de la bande dudit transporteur. Ce système de maintien en tension de la bande peut affecter un grand nombre de formes.

Dans les exemples représentés, le système 24 de maintien en tension de la bande 20 du transporteur 2 amont comprend un organe rotatif 241 formé par un rouleau. Cet organe 241 rotatif est porté par le support 5 pour pouvoir être solidaire en déplacement du support 5. Cet organe 241 rotatif est disposé autour de la bande 20 à l'extérieur de la boucle formée par la bande 20 et en contact d'appui avec la bande 20. Cet organe 241 rotatif est également couplé au système 9 d'entraînement en déplacement des premier et deuxième ensembles 7 et 8 pour permettre un déplacement en parallèle du déplacement desdits ensembles.

De la même manière, le système 44 de maintien en tension de la bande 40 du transporteur 4 aval comprend un organe 441 rotatif formé par un rouleau. Cet organe 441 rotatif est porté par le support 5 pour pouvoir être solidaire en déplacement du support 5. Cet organe 441 rotatif est disposé autour de la bande 40 à l'extérieur de la boucle formée par ladite bande et en contact d'appui avec la bande 40. Cet organe 441 rotatif est également couplé au système 9 d'entraînement en déplacement du premier et deuxième ensembles 7 et 8 pour permettre un déplacement en parallèle du déplacement desdits ensembles.

Le système 34 de maintien en tension de la bande 30 du transporteur 3 intermédiaire comprend quant à lui l'un, des rouleaux représentés en 310 aux figures autour desquels la bande 30 dudit transporteur 3 s'enroule au moins partiellement, ce rouleau 310 étant un rouleau autre que l'un des rouleaux 311 ou 312 définissant une extrémité 331 ou 332 du chemin 33 du transporteur 3. Ce rouleau peut être chargé par un ressort non représenté tendant à le rappeler en position de tension de la bande.

Comme mentionné ci-dessus, le dispositif 1 de transport comprend encore, pour chaque transporteur, un dispositif moteur d'entraînement en déplacement de la bande autour des rouleaux. Les dispositifs moteur des transporteurs sont indépendants d'un transporteur à un autre et sont agencés pour permettre l'entraînement des transporteurs suivant un même sens d'entraînement en déplacement mais à des vitesses qui peuvent être identiques ou différentes et fixes ou variables. Dans les exemples représentés, le transporteur intermédiaire est entraîné en déplacement à une vitesse V2 variable. Les transporteurs amont et aval sont entraînés à une vitesse constante, la vitesse V1 correspondant au transporteur amont, la vitesse V3 correspondant au transporteur aval. La vitesse V1 du transporteur amont est inférieure à la vitesse V3 du transporteur aval.

Dans les exemples représentés, le dispositif moteur d'entraînement en déplacement de la bande 20 du transporteur 2 est formé par le rouleau 210 en prise via une courroie avec un arbre moteur, courroie et arbre moteur formant le système 251 d'entraînement en rotation du rouleau 210. Ce rouleau 210 correspondant à l'un des rouleaux autour desquels la bande du transporteur s'enroule au moins partiellement.

De la même manière, le dispositif moteur 35 d'entraînement en déplacement de la bande 30 du transporteur 3 est formé par le rouleau 310 en prise via une courroie avec un arbre moteur, courroie et arbre moteur formant le dispositif 351 moteur d'entraînement en rotation du rouleau 310.

Enfin, le dispositif moteur 45 d'entraînement en déplacement de la bande 40 du transporteur 4 est formé par le rouleau 410 en prise via une courroie avec un arbre moteur, courroie et arbre moteur formant le système 451 moteur d'entraînement en rotation du rouleau 410, ce rouleau 410 formant l'un des rouleaux autour desquels la bande 40 du transporteur s'enroule au moins partiellement.

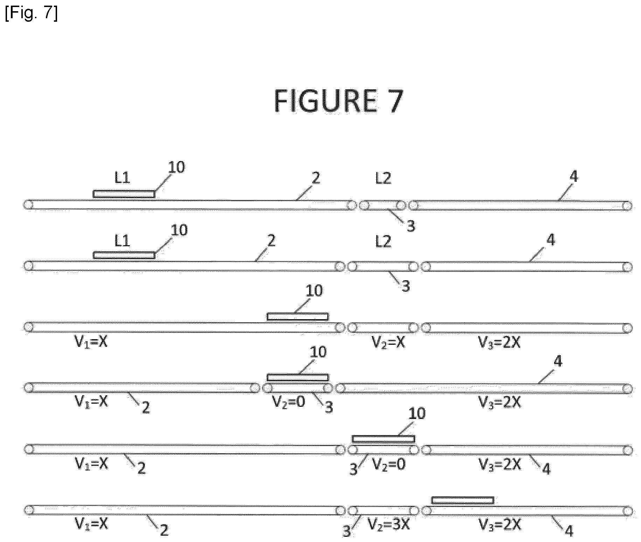

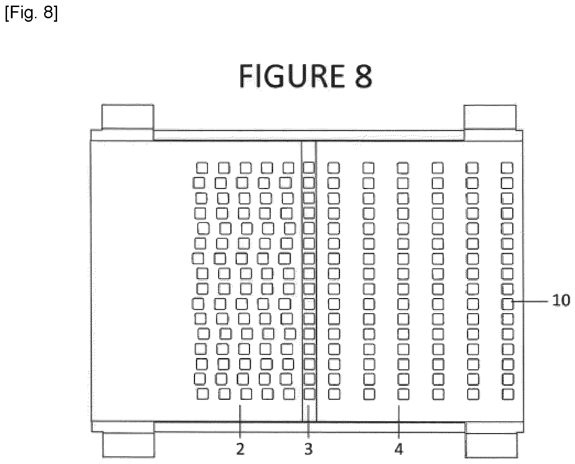

Le fonctionnement d'un dispositif 1 de transmission, tel que décrit ci-dessus, s'opère comme suit. Dans un premier temps, il est procédé au réglage de la longueur du chemin de transporteur 3 intermédiaire généralement à partir d'une donnée de consigne de longueur mémorisée. En variante, ce réglage peut s'opérer uniquement sur une base visuelle. Ce réglage s'opère par déplacement des premier et deuxième ensembles 7 et 8. Une fois ce réglage opéré, le dispositif 6 d'entraînement en déplacement en va-et-vient du support 5 peut être activé pour commander dans un premier temps un recul du transporteur 3 intermédiaire pris par rapport au sens d'avancement des produits en parallèle d'une réduction de la longueur du chemin du transporteur 2 amont et d'une augmentation de la longueur du chemin du transporteur 4 aval, puis une avance du transporteur 3 intermédiaire en parallèle d'une augmentation de la longueur du chemin du transporteur 2 amont et d'une réduction de la longueur du chemin du transporteur 4 aval. Au cours de ce déplacement du transporteur 3 intermédiaire, la vitesse V2 de la bande dudit transporteur passe d'une valeur égale à X avant la phase de recul à une valeur égale à 0 pendant les phases de recul et d'avance du transporteur 3 intermédiaire pour permettre un transfert du produit du transporteur 2 amont vers le transporteur 3 intermédiaire avant d'être égale à 2X pour permettre un transfert du produit du transporteur 3 intermédiaire vers le transporteur 4 aval. Ces différentes phases sont illustrées à la figure 7. Ces déplacements des fronts de transition permettent de grouper, dégrouper, d'aligner, de phaser les produits ou autre comme illustré à la figure 8. On note que le dispositif 1 de transport présente donc une première configuration dans laquelle le système 9 d'entraînement en déplacement des premier et deuxième ensembles est actif et le dispositif 6 d'entraînement en déplacement en va-et-vient du support 5 est inactif pour permettre un réglage en longueur du transporteur 3 intermédiaire et une configuration dans laquelle le système 9 d'entraînement en déplacement des premier et deuxième ensembles est inactif et le dispositif 6 d'entraînement en déplacement en va-et-vient du support 5 est actif pour permettre un transfert des produits d'un transporteur à un autre.

## Revendications

1. Dispositif (1) de transport de produits (10) comprenant au moins un transporteur (2) dit amont, un transporteur (3) intermédiaire et un transporteur (4) dit aval disposés en ligne avec le transporteur (3) intermédiaire s'étendant entre les transporteurs (2, 4) amont et aval, chaque transporteur (2 ; 3 ; 4) comprenant au moins une bande (20 ; 30 ; 40) sans fin, des rouleaux (210, 211, 212 ; 310, 311, 312, 410, 411, 412) autour desquels la bande (20 ; 30 ; 40) s'enroule au moins partiellement et au moins un dispositif (25 ; 35 ; 45) moteur d'entraînement en déplacement de ladite bande (20 ; 30 ; 40) autour desdits rouleaux (210, 211, 212 ; 310, 311, 312 ; 410, 411, 412) la bande (20 ; 30 ; 40) de chaque transporteur (2, 3, 4) délimitant entre deux (211, 212 ; 311, 312 ; 411, 412) des rouleaux dudit transporteur (2, 3, 4), au niveau de la surface dite active de la bande (20 ; 30 ; 40) apte à porter des produits (10), un chemin (23 ; 33 ; 43) d'entraînement en déplacement des produits (10) suivant une direction (D) de déplacement des produits (10) avec l'une (231 ; 331 ; 431) des extrémités (231, 232 ; 331, 332 ; 431, 432) du chemin (23 ; 33 ; 43) définie par l'un des rouleaux formant l'entrée du chemin (23 ; 33 ; 43) d'alimentation en produits (10) du chemin (23 ; 33 ; 43) et l'extrémité (232, 332, 432) opposée du chemin (23 ; 33 ; 43) définie par un autre (212 ; 312 ; 412) des rouleaux formant la sortie d'évacuation des produits (10), les chemins (23, 33, 43) des transporteurs (2, 3, 4) s'étendant dans le prolongement l'un de l'autre, dans lequel au moins le rouleau (212) définissant l'extrémité (232) de sortie du chemin (23) du transporteur amont (2), le rouleau (411) définissant l'extrémité (431) d'entrée du chemin (43) du transporteur aval (4) et les rouleaux (311, 312) définissant respectivement l'extrémité (331) d'entrée et l'extrémité (332) de sortie du chemin (33) du transporteur (3) intermédiaire sont portés par un support (5) commun équipé d'un dispositif (6) d'entraînement en déplacement en va-et-vient du support (5) pour permettre un déplacement des rouleaux (212, 411, 311, 312) portés par ledit support (5) dans le sens d'un rapprochement de l'extrémité (231) d'entrée du chemin (23) du transporteur (2) amont lors d'une phase dite de recul du transporteur (3) intermédiaire et dans le sens d'un rapprochement de l'extrémité (432) de sortie du chemin (43) du transporteur (4) aval lors d'une phase dite d'avance du transporteur (3) intermédiaire, dans lequel le rouleau (212) définissant l'extrémité de sortie du chemin (23) du transporteur amont (2) et le rouleau (311) définissant l'extrémité (331) d'entrée du chemin (33) du transporteur (3) intermédiaire forment premier ensemble (7), et dans lequel le rouleau (312) définissant l'extrémité (332) de sortie du chemin (33) du transporteur (3) intermédiaire et le rouleau (411) définissant l'extrémité (431) d'entrée du chemin (43) du transporteur (4) aval forment un deuxième ensemble (8), **caractérisé en ce que** chaque transporteur (2; 3; 4) comprend un système (24 ; 34 ; 44) de maintien en tension de la bande (20 ; 30 ; 40) et **en ce que** le dispositif (1) de transport comprend, embarqué sur ledit support (5), un système (9) d'entraînement en déplacement des premier et deuxième ensembles (7, 8) dans le sens d'un rapprochement ou d'un écartement l'un de l'autre pour permettre de faire varier la longueur du chemin (33) du transporteur (3) intermédiaire prise entre l'extrémité (331) d'entrée et l'extrémité (332) de sortie du chemin (33) dudit transporteur (3) intermédiaire.

2. Dispositif (1) de transport de produits (10) selon la revendication 1, **caractérisé en ce que** le système (9) d'entraînement en déplacement des premier et deuxième ensembles (7, 8) comprend deux vérins (91, 92) et une unité (93) de pilotage, de préférence de manière synchrone, des vérins (91, 92), l'un (91) des vérins (91, 92) étant disposé entre le support (5) et le premier ensemble (7), l'autre (92) des vérins (91, 92) étant disposé entre le support (5) et le deuxième ensemble (8).

3. Dispositif (1) de transport de produits (10) selon la revendication 1, **caractérisé en ce que** le système (9) d'entraînement en déplacement des premier et deuxième ensembles (7, 8) comprend une transmission sans fin à courroie (94) à deux sens opposés d'entraînement en déplacement de ladite courroie (94) et une unité (95) de pilotage de ladite transmission, cette courroie (94), qui suit une trajectoire en boucle fermée, présentant deux brins (941, 942) parallèles, lesdits premier et deuxième ensembles (7, 8) étant couplés, l'un (7), à l'un des brins (941, 942), l'autre (8) à l'autre des brins (941, 942).

4. Dispositif (1) de transport de produits (10) selon l'une des revendications 1 à 3, **caractérisé en ce que** le dispositif (6) d'entraînement en déplacement en va-et-vient du support (5) comprend un chariot (61), un chemin (62) de guidage en déplacement du chariot (61), et un mécanisme (63) d'entraînement en déplacement en va-et-vient dudit chariot (61) le long du chemin (62) de guidage, ledit chariot (61) étant couplé mécaniquement au support (5).

5. Dispositif (1) de transport de produits (10) selon la revendication 4, **caractérisé en ce que** le mécanisme (63) d'entraînement en déplacement en va-et-vient du chariot (61) comprend une transmission (631) sans fin à courroie (632), ledit chariot (61) étant couplé à ladite courroie (632).

6. Dispositif (1) de transport de produits (30) selon l'une des revendications 1 à 4, **caractérisé en ce que** le dispositif (6) d'entraînement en déplacement en va-et-vient du support (5) est configuré pour permettre, lors d'une phase dite de recul du transporteur (3) intermédiaire, une course de déplacement des rouleaux (311, 312) définissant respectivement l'extrémité (331) d'entrée et l'extrémité (332) de sortie du chemin (33) du transporteur (3) intermédiaire au moins égale à l'entraxe entre lesdits rouleaux (311, 312).

7. Dispositif (1) de transport de produits (10) selon l'une des revendications 1 à 6, **caractérisé en ce que** le système (24) de maintien en tension de la bande (20) d'au moins l'un (2) des transporteurs (2, 3, 4) comprend au moins un organe (241) rotatif de type rouleau porté par le support (5), cet organe (241) rotatif étant disposé autour de la bande (20), à l'extérieur de la boucle fermée formée par ladite bande (20) et en contact d'appui avec la bande (20).

8. Dispositif (1) de transport de produits (10) selon l'une des revendications 1 à 7, **caractérisé en ce que** le système (34) de maintien en tension de la bande (301) d'au moins l'un (3) des transporteurs (2, 3, 4) comprend au moins l'un (310) des rouleaux (310, 311, 312) autour desquels la bande (30) dudit transporteur (3) s'enroule au moins partiellement, ce rouleau (310) étant un rouleau autre que l'un des rouleaux (311, 312) définissant une extrémité (331, 332) du chemin (33) du transporteur (3).

9. Dispositif (1) de transport de produits (30) selon l'une des revendications 1 à 8, **caractérisé en ce que** le ou au moins l'un des dispositifs (25 ; 35 ; 45) moteur d'entraînement en déplacement de la bande (20 ; 30 ; 40) autour desdits rouleaux d'au moins l'un des transporteurs (2 ; 3 ; 4) est formé par l'un des rouleaux (210, 211, 212 ; 310, 311, 312 ; 410, 411, 412) autour desquels la bande (20 ; 30 ; 40) dudit transporteur (2, 3, 4) s'enroule au moins partiellement, ce rouleau (210, 310, 410) étant équipé d'un système (251, 351, 451) moteur d'entraînement en rotation.

10. Dispositif (1) de transport de produits (20) selon l'une des revendications 1 à 9, **caractérisé en ce que** le système (9) d'entraînement en déplacement des premier et deuxième ensembles (7, 8) dans le sens d'un rapprochement ou d'un écartement l'un de l'autre est un système (9) d'entraînement en déplacement de manière synchrone desdits premier et deuxième ensembles (7, 8).

## Patentansprüche

1. Transportvorrichtung (1) für Produkte (10), umfassend mindestens einen vorderen Transporter (2), einen mittleren Transporter (3) und einen hinteren Transporter (4), die in Reihe mit dem mittleren Transporter (3) angeordnet sind, der sich zwischen dem vorderen und hinteren Transporter (2, 4) erstreckt, wobei jeder Transporter (2; 3; 4) mindestens ein Endlosband (20; 30; 40), Walzen (210, 211, 212; 310, 311, 312, 410, 411, 412), um die sich das Band (20; 30; 40) mindestens teilweise wickelt, und mindestens eine Motorvorrichtung (25; 35; 45) für den Verlagerungsantrieb des Bandes (20; 30; 40) um Walzen (210, 211, 212; 310, 311, 312; 410, 411, 412) umfasst, wobei das Band (20; 30; 40) jedes Transporters (2, 3, 4) zwischen zwei (211, 212; 311, 312; 411, 412) der Walzen des Transporters (2, 3, 4) im Bereich der aktiven Oberfläche des Bandes (20; 30; 40), die imstande ist, Produkte (10) zu tragen, einen Weg (23; 33; 43) für den Verlagerungsantrieb der Produkte (10) gemäß einer Verlagerungsrichtung (D) der Produkte (10) mit einem (231; 331; 431) der Enden (231, 232; 331, 332; 431, 432) des Wegs (23; 33; 43), das von einer der Walzen definiert ist, die den Eingang des Wegs (23; 33; 43) zur Versorgung mit Produkten (10) des Wegs (23; 33; 43) und dem entgegengesetzten Ende (232, 332, 432) des Wegs (23; 33; 43), das von einer anderen (212; 312; 412) der Walzen definiert ist, die den Evakuierungsausgang der Produkte (10) bildet, begrenzt, wobei sich die Wege (23, 33, 43) der Transporter (2, 3, 4) in der Verlängerung zueinander erstrecken, wobei mindestens die Walze (212), die das Ausgangsende (232) des Wegs (23) des vorderen Transporters (2) definiert, die Walze (411), die das Eingangsende (431) des Wegs (43) des hinteren Transporters (4) definiert, und die Walzen (311, 312), die jeweils das Eingangsende (331) und das Ausgangsende (332) des Wegs (33) des mittleren Transporters (3) definieren, von einem gemeinsamen Träger (5) getragen werden, der mit einer Vorrichtung (6) für den Hin- und Her-Verlagerungsantrieb des Trägers (5) ausgestattet ist, um eine Verlagerung der von dem Träger (5) getragenen Walzen (212, 411, 311, 312) in Richtung einer Annäherung des Eingangsendes (231) des Wegs (23) des vorderen Transporters (2) bei einer Rückzugsphase des mittleren Transporters (3) und in Richtung einer Annäherung des Ausgangsendes (432) des Wegs (43) des hinteren Transporters (4) bei einer Vortriebsphase des mittleren Transporters (3) zu gestatten, wobei die Walze (212), die das Ausgangsende des Wegs (23) des vorderen Transporters (2) definiert und die Walze (311), die das Eingangsende (331) des Wegs (33) des mittleren Transporters (3) definiert, eine erste Einheit (7) bilden, und wobei die Walze (312), die das Ausgangsende (332) des Wegs (33) des mittleren Transporters (3) definiert und die Walze (411), die das Eingangsende (431) des Wegs (43) des hinteren Transporters (4) definiert, eine zweite Einheit (8) bilden, **dadurch gekennzeichnet, dass** jeder Transporter (2; 3; 4) ein System (24; 34; 44) für das gespannte Halten des Bandes (20; 30; 40) umfasst und dass die Transportvorrichtung (1), eingebettet auf dem Träger (5), ein System (9) für den Verlagerungsantrieb der ersten und zweiten Einheit (7, 8) in Richtung einer Annäherung oder einer Beabstandung an- oder voneinander umfasst, um das Variieren der Länge des Wegs (33) des mittleren Transporters (3) zwischen dem Eingangsende (331) und dem Ausgangsende (332) des Wegs (33) des mittleren Transporters (3) zu gestatten.

2. Transportvorrichtung (1) für Produkte (10) nach Anspruch 1, **dadurch gekennzeichnet, dass** das System (9) für den Verlagerungsantrieb der ersten und zweiten Einheit (7, 8) zwei Zylinder (91, 92) und eine Einheit (93) zur vorzugsweisen synchronen Steuerung der Zylinder (91, 92) umfasst, wobei einer (91) der Zylinder (91, 92) zwischen dem Träger (5) und der ersten Einheit (7) angeordnet ist, wogegen der andere (92) der Zylinder (91, 92) zwischen dem Träger (5) und der zweiten Einheit (8) angeordnet ist.

3. Transportvorrichtung (1) für Produkte (10) nach Anspruch 1, **dadurch gekennzeichnet, dass** das System (9) für den Verlagerungsantrieb der ersten und zweiten Einheit (7, 8) eine Endlosübertragung mit Riemen (94) in zwei entgegengesetzte Verlagerungsantriebsrichtungen des Riemens (94) und eine Steuerungseinheit (95) der Übertragung umfasst, wobei dieser Riemen (94), der eine Bahn in geschlossener Schleife beschreibt, zwei parallele Stränge (941, 942) aufweist, wobei die erste und zweite Einheit (7, 8) verbunden sind, eine (7) mit dem einen der Stränge (941, 942), die andere (8) mit dem anderen der Stränge (941, 942).

4. Transportvorrichtung (1) für Produkte (10) nach einem der Ansprüche 1 bis 3, **dadurch gekennzeichnet, dass** die Vorrichtung (6) für den Hin- und Her-Verlagerungsantrieb des Trägers (5) einen Schlitten (61), einen Führungsweg (62) für die Verlagerung des Schlittens (61) und einen Mechanismus (63) für den Hin- und Her-Verlagerungsantrieb des Schlittens (61) auf dem Führungsweg (62) umfasst, wobei der Schlitten (61) mit dem Träger (5) mechanisch verbunden ist.

5. Transportvorrichtung (1) für Produkte (10) nach Anspruch 4, **dadurch gekennzeichnet, dass** der Mechanismus (63) für den Hin- und Her-Verlagerungsantrieb des Schlittens (61) eine Endlosübertragung (631) mit Riemen (632) umfasst, wobei der Schlitten (61) mit dem Riemen (632) verbunden ist.

6. Transportvorrichtung (1) für Produkte (30) nach einem der Ansprüche 1 bis 4, **dadurch gekennzeichnet, dass** die Vorrichtung (6) für den Hin- und Her-Verlagerungsantrieb des Trägers (5) ausgelegt ist, um bei einer Rückzugsphase des mittleren Transporters (3) einen Verlagerungslauf der Walzen (311, 312), die jeweils das Eingangsende (331) und das Ausgangsende (332) des Wegs (33) des mittleren Transporters (3) definieren, zu gestatten, der mindestens gleich dem Achsabstand zwischen den Walzen (311, 312) ist.

7. Transportvorrichtung (1) für Produkte (10) nach einem der Ansprüche 1 bis 6, **dadurch gekennzeichnet, dass** das System (24) für das gespannte Halten des Bandes (20) von mindestens dem einen (2) der Transporter (2, 3, 4) mindestens ein Rotationsorgan (241) vom Typ Walze umfasst, das von dem Träger (5) getragen wird, wobei dieses Rotationsorgan (241) um das Band (20) außerhalb der geschlossenen Schleife angeordnet ist, die von dem Band (20) und im Stützkontakt mit dem Band (20) gebildet ist.

8. Transportvorrichtung (1) für Produkte (10) nach einem der Ansprüche 1 bis 7, **dadurch gekennzeichnet, dass** das System (24) für das gespannte Halten des Bandes (301) von mindestens dem einen (3) der Transporter (2, 3, 4) mindestens eine (310) der Walzen (310, 311, 312) umfasst, um die sich das Band (30) des Transporters (3) mindestens teilweise wickelt, wobei diese Walze (310) eine andere Walze als eine der Walzen (311, 312) ist, die ein Ende (331, 332) des Wegs (33) des Transporters (3) definieren.

9. Transportvorrichtung (1) für Produkte (30) nach einem der Ansprüche 1 bis 8, **dadurch gekennzeichnet, dass** die oder mindestens eine der Motorvorrichtungen (25; 35; 45) für den Verlagerungsantrieb des Bandes (20; 30; 40) um Walzen von mindestens einem der Transporter (2; 3; 4) von einer der Walzen (210, 211, 212; 310, 311, 312; 410, 411, 412) gebildet ist, um die sich das Band (20; 30; 40) des Transporters (2, 3, 4) mindestens teilweise wickelt, wobei diese Walze (210, 310, 410) mit einem Rotationsantriebs-Motorsystem (251, 351, 451) ausgestattet ist.

10. Transportvorrichtung (1) für Produkte (20) nach einem der Ansprüche 1 bis 9, **dadurch gekennzeichnet, dass** das System (9) für den Verlagerungsantrieb der ersten und zweiten Einheit (7, 8) in Richtung einer Annäherung oder einer Beabstandung an- oder voneinander ein System (9) für den synchronen Verlagerungsantrieb der ersten und zweiten Einheit (7, 8) ist.

## Claims

1. A device (1) for transporting products (10) comprising at least one conveyor (2), called upstream conveyor, an intermediate conveyor (3) and a conveyor (4), called downstream conveyor, arranged in line with the intermediate conveyor (3) extending between the upstream and downstream conveyors (2, 4), each conveyor (2; 3; 4) comprising at least one endless band (20; 30; 40), rollers (210, 211, 212; 310, 311, 312, 410, 411, 412) around which the band (20; 30; 40) winds at least partially and at least one motor device (25; 35; 45) driving the movement of said band (20; 30; 40) around said rollers (210, 211, 212; 310, 311, 312; 410, 411, 412), the band (20; 30; 40) of each conveyor (2, 3, 4) delimiting, between two (211, 212; 311, 312; 411, 412) of the rollers of said conveyor (2, 3, 4), at the surface, called active surface, of the band (20; 30; 40) able to carry products (10), a path (23; 33; 43) for driving the movement of the products (10) along a movement direction (D) of the products (10) with one (231; 331; 431) of the ends (231, 232; 331, 332; 431, 432) of the path (23; 33; 43) defined by one of the rollers forming the input of the path (23; 33; 43) for supplying products (10) to the path (23; 33; 43) and the opposite end (232, 332, 432) of the path (23; 33; 43) defined by another (212; 312; 412) of the rollers forming the outlet for discharging products (10), the paths (23, 33, 43) of the conveyors (2, 3, 4) extending in the extension of one another, wherein at least the roller (212) defining the outlet end (232) of the path (23) of the upstream conveyor (2), the roller (411) defining the input end (431) of the path (43) of the downstream conveyor (4) and the rollers (311, 312) respectively defining the input end (331) and the output end (332) of the path (33) of the intermediate conveyor (3) are carried by a common support (5) equipped with a device (6) for driving the support (5) in a back-and-forth movement to allow a movement of the rollers (212, 411, 311, 312) carried by said support (5) in the direction of an approach of the input end (231) of the path (23) of the upstream conveyor (2) during a so-called withdrawal phase of the intermediate conveyor (3) and in the direction of an approach of the output end (432) of the path (43) of the downstream conveyor (4) during a so-called advance phase of the intermediate conveyor (3), wherein the roller (212) defining the output end of the path (23) of the upstream conveyor (2) and the roller (311) defining the input end (331) of the path (33) of the intermediate conveyor (3) form a first assembly (7), and wherein the roller (312) defining the output end (332) of the path (33) of the intermediate conveyor (3) and the roller (411) defining the input end (431) of the path (43) of the downstream conveyor (4) form a second assembly (8), **characterized in that** each conveyor (2, 3, 4) comprises a system (24; 34; 44) for keeping the band (20; 30; 40) under tension and **in that** the transport device (1) comprises, integrated onto said support (5), a system (9) for driving the movement of the first and second assemblies (7, 8) in the direction of an approach or a separation relative to one another to make it possible to vary the length of the path (33) of the intermediate conveyor (3) between the input end (331) and the output end (332) of the path (33) of said intermediate conveyor (3).

2. The device (1) for transporting products (10) according to claim 1, **characterized in that** the system (9) for driving the movement of the first and second assemblies (7, 8) comprises two jacks (91, 92) and a control unit (93) for controlling the jacks (91, 92), preferably synchronously, one (91) of the jacks (91, 92) being arranged between the support (5) and the first assembly (7), the other (92) of the jacks (91, 92) being arranged between the support (5) and the second assembly (8).

3. The device (1) for transporting products (10) according to claim 1, **characterized in that** the system (9) for driving the movement of the first and second assemblies (7, 8) comprises an endless transmission with belt (94) with two opposite directions for driving the movement of said belt (94) and a control unit (95) for controlling said transmission, this belt (94), which follows a closed-loop trajectory, having two parallel strands (941, 942), said first and second assemblies (7, 8) being coupled, one (7) to one of the strands (941, 942), the other (8) to the other of the strands (941, 942).

4. The device (1) for transporting products (10) according to one of claims 1 to 3, **characterized in that** the device (6) for driving the support (5) in back-and-forth movement comprises a carriage (61), a path (62) for guiding the movement of the carriage (61), and a mechanism (63) for driving said carriage (61) in back-and-forth movement along the guide path (62), said carriage (61) being mechanically coupled to the support (5).

5. The device (1) for transporting products (10) according to claim 4, **characterized in that** the mechanism (63) for driving the back-and-forth movement of the carriage (61) comprises an endless transmission (631) with belt (632), said carriage (61) being coupled to said belt (632).

6. The device (1) for transporting products (30) according to one of claims 1 to 4, **characterized in that** the device (6) for driving the back-and-forth movement of the support (5) is configured to allow, during a so-called withdrawal phase of the intermediate conveyor (3), a movement travel of the rollers (311, 312) respectively defining the input end (331) and the output end (332) of the path (33) of the intermediate conveyor (3) at least equal to the center distance between said rollers (311, 312).

7. The device (1) for transporting products (10) according to one of claims 1 to 6, **characterized in that** the system (24) for keeping the band (20) of at least one (2) of the conveyors (2, 3, 4) under tension comprises at least one rotating member (241) of the roller type carried by the support (5), this rotating member (241) being arranged around the band (20), outside the closed loop formed by said band (20) and in bearing contact with the band (20).

8. The device (1) for transporting products (10) according to one of claims 1 to 7, **characterized in that** the system (34) for keeping the band (301) of at least one (3) of the conveyors (2, 3, 4) under tension comprises at least one (310) of the rollers (310, 311, 312) around which the band (30) of said conveyor (3) winds at least partially, this roller (310) being a roller other than one of the rollers (311, 312) defining one end (331, 332) of the path (33) of the conveyor (3).

9. The device (1) for transporting products (30) according to one of claims 1 to 8, **characterized in that** the or at least one of the motor devices (25; 35; 45) for driving the movement of the band (20; 30; 40) around said rollers of at least one of the conveyors (2; 3; 4) is formed by one of the rollers (210, 211, 212; 310, 311, 312; 410, 411, 412) around which the band (20; 30; 40) of said conveyor (2, 3, 4) winds at least partially, this roller (210, 310, 410) being equipped with a motor system (251, 351, 451) for driving in rotation.

10. The device (1) for transporting products (20) according to one of claims 1 to 9, **characterized in that** the system (9) for driving the movement of the first and second assemblies (7, 8) in the direction coming closer to or further from one another is a system (9) for driving the movement of said first and second assemblies (7, 8) synchronously.
